# FASCICULE DE BREVET EUROPEEN

(11) **EP 2 323 583 B1**
(45) Date de publication et mention de la délivrance du brevet: **14.03.2018**
(21) Numéro de dépôt: 09750155.5
(22) Date de dépôt: 14.05.2009
(51) Int. Cl.: A61C 17/06

(54) **EMBOUT DE CANULE D'EVACUATION DE FLUX SALIVAIRE ET/OU SANGUIN**
KANÜLENENDSTÜCK ZUR ENTNAHME VON SPEICHEL UND/ODER BLUT
CANNULA ENDPIECE FOR REMOVAL OF SALIVA AND/OR BLOOD

(30) Priorité: 19.05.2008 FR 0802678
(43) Date de publication de la demande: 25.05.2011
(73) Titulaire: Bombin, Jean, 83000 Toulon (FR); Mackenzie, Julian, 83320 Carqueiranne (FR)
(72) Inventeur: BOMBIN, Jean, 83000 Toulon (FR)
(74) Mandataire: Hirsch & Associés
(86) Numéro de dépôt international: PCT/IB2009/005602
(87) Numéro de publication internationale: WO 2009/141698

(56) Documents cités:
- CH-A- 257 875
- US-A- 2 950 533
- US-A- 4 906 188
- US-A- 5 080 587
- US-A1- 2003 054 317

## Description

La présente invention concerne un embout de canule d'évacuation de flux salivaire et/ou sanguin.

Les soins ou interventions bucco-dentaires sont des pratiques opératoires réalisées dans la cavité buccale d'un patient par un praticien. On entend par «praticien» un chirurgien dentiste, un stomatologue et plus généralement toute personne ayant à pratiquer une intervention dans le milieu bucco-dentaire. Le praticien pratique son intervention en introduisant différents types d'instruments ou d'ustensiles dans la cavité buccale. Les interventions bucco-dentaires permettent notamment de pratiquer des soins conservateurs ou de procéder à des interventions de chirurgie bucco-dentaire.

Or, la bouche permettant à la fois la respiration, l'alimentation et la parole, est une partie du corps humain qui est fragile et hypersensible. Ainsi, les tissus internes de la bouche concentrent, en particulier, des vaisseaux sanguins, et des glandes salivaires qui assurent la lubrification de la cavité buccale qui doit être exempte de tout corps étranger.

Dans de telles conditions, le praticien intervient dans un milieu où la salive et le sang peuvent gêner l'intervention effectuée. Ceci est d'autant plus vrai que l'introduction d'instruments dans la cavité buccale du patient stimule les mécanismes de défense de la bouche, provoquant notamment une hyperactivité des glandes salivaires. L'évacuation du flux salivaire et/ou sanguin auxquels vient s'ajouter le liquide d'irrigation ou de refroidissement reste donc un problème constamment rencontré lors des soins bucco-dentaires.

Sont connus des documents US2950533, US496188, et WO-A-98/24383 des canules pour l'aspiration de la salive dans la bouche d'un patient qui subit une intervention bucco-dentaire, cette intervention impliquant l'utilisation de liquides, par exemple des liquides médicaux ou d'eau pour l'irrigation. Ces liquides doivent être aspirés tout au long de l'intervention. Dans ce but, une canule d'aspiration est positionnée dans la bouche du patient. Cette canule est composée d'un tube en forme de crochet destiné à reposer sur l'ensemble lèvre/mâchoire et elle est relié à une source d'aspiration à faible pression. Le tube est formé de deux matériaux plastiques différents; le premier matériau est souple et le second présente une dureté plus grande que le premier pour permettre le formage du tube.

Les canules utilisées dans le document WO-A-98/24383 imposent cependant le recours à une «troisième main» pour tenir la canule. Cette «troisième main» peut être celle d'un assistant du praticien ou celle du patient. Cela rend la pratique de l'opération plus difficile voire dangereuse dans certains cas, notamment si la canule est lâchée en cours d'intervention.

Le document FR-A-2 560 038 décrit un dispositif destiné à la pratique odonto-stomatologique permettant une protection de la langue et de la joue, ainsi qu'une aspiration de la salive et des liquides de refroidissement. Le dispositif comporte une partie servant de manche pour la tenue en main de l'instrument.

Le praticien doit donc tenir le dispositif avec une main. Cela peut gêner le praticien dans les gestes à effectuer lors de l'intervention sur le patient.

Il existe donc un besoin pour un embout de canule d'évacuation du flux salivaire et/ou sanguin plus simple d'utilisation, notamment un embout d'une canule qui ne nécessite pas d'être maintenue une fois posée dans la bouche du patient.

La présente invention a pour objet un embout de canule d'évacuation de flux salivaire et/ou sanguin selon la revendication 1. Un tel embout de canule permet d'obtenir un champ opératoire asséché, non envahi par les liquides d'irrigation ou par la salive ou le sang. L'embout de canule, et donc la canule, conserve sa position sans nécessité d'être maintenu par une main que ce soit celle du praticien, d'un assistant du praticien ou celle du patient. Le praticien peut donc pratiquer l'intervention avec plus d'aisance. En outre, le risque que l'embout de canule tombe en cours d'intervention est supprimé. L'embout de canule est donc moins dangereux à l'usage. De plus, la pose de cet embout de canule est facile et rapide. L'embout de canule rend donc plus simple l'utilisation de la canule par le praticien tout en étant fiable. Il est en outre totalement compatible avec la présence d'une digue.

Selon les modes de réalisation, l'embout de canule de l'invention peut comprendre en outre une ou plusieurs de caractéristiques suivantes:
- les deux branches tubulaires sont de même longueur ou de longueurs inégales;
- le coude de la seconde branche s'étend selon une direction sensiblement parallèle à celle de l'axe de l'élément tubulaire;
- l'élément tubulaire raccordé à l'extrémité de la première branche présente au moins une ouverture;
- l'embout de canule comporte au moins une ouverture située à une extrémité de l'élément tubulaire;
- l'embout de canule comporte au moins une ouverture située sur la surface supérieure de l'élément tubulaire;
- l'embout de canule comprend une pluralité d'ouvertures disposées sur la surface de l'élément tubulaire;
- ladite au moins une ouverture présente un diamètre compris entre 1 mm et 3 mm;
- un fil d'acier est noyé sur l'ensemble de la longueur de l'embout de canule formée par les trois conduits tubulaires;
- l'embout de canule est formé d'un matériau plastique.

D'autres caractéristiques et avantages de l'invention apparaîtront à la lecture de la description détaillée qui suit des modes de réalisation de l'invention, donnés à titre d'exemple uniquement et en références aux dessins qui montrent:
- figure 1, une vue schématique d'un exemple d'embout de canule;
- figure 2, une vue schématique de l'embout de canule de la figure 1 lequel chevauche la mâchoire dans la bouche d'un patient.

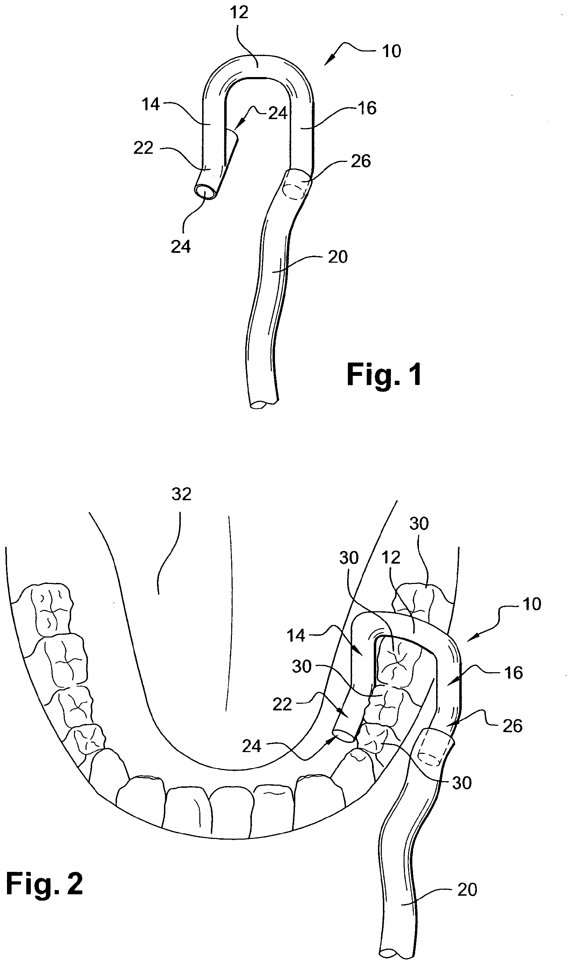

La figure 1 est une vue schématique d'un exemple d'embout de canule. L'embout de canule 10 est un embout d'une canule d'évacuation du flux salivaire et/ou sanguin. Cet embout de canule 10 comprend trois conduits tubulaires 14, 12, 16 reliés entre eux. Ces trois conduits forment un embout de canule 10 ayant la forme générale d'un étrier ou de la lettre «U» inversée. La section de l'embout de canule 10 peut être circulaire ou ovalisée et présenter un diamètre de 3 mm à 6 mm environ.

L'embout de canule 10 est en fait formé d'une première branche tubulaire creuse 14, d'une deuxième branche tubulaire creuse 16 et d'une partie tubulaire 12 arquée creuse reliant ces deux branches.

L'extrémité libre de la première branche 14 de l'embout de canule 10 est destinée à reposer sur le sillon mylo-hyoïdien du patient. Le sillon mylo-hyoïdien se situe entre le bord latéral de la langue et le rebord alvéolo-dentaire de la face interne de la mandibule. La partie tubulaire de forme arquée 12 de l'embout de canule 10 ainsi que des première 14 et seconde 16 branche permet de poser directement l'embout de canule 10 sur la mâchoire et de l'y maintenir en position de chevauchement sans la tenir. La première branche 14 permet ainsi de se passer de l'intervention humaine pour tenir la canule 10.

La seconde branche 16 de l'embout de canule 10 comporte une extrémité destinée à être reliée à des moyens d'aspiration. De tels moyens d'aspiration peuvent consister en un tuyau 20 d'aspiration. Le tuyau 20 est en général un tuyau flexible transparent. Le tuyau 20 permet de transmettre une force de succion qui sert à aspirer le flux salivaire et/ou sanguin ainsi que les liquides de traitement utilisés lors de l'intervention.

Comme le montre la figure 2, qui illustre le positionnement de l'embout de canule de la figure 1 dans la bouche d'un patient, la première branche 14 de l'embout de canule 10 s'insère entre les dents 30 et la langue 32 du patient. La seconde branche 16 vient s'insérer entre les dents 30 et la joue du patient qui n'est pas représentée sur la figure 2, et la partie tubulaire arquée creuse 12 reliant la première 14 et la seconde 16 branches dudit embout de canule repose sur la mâchoire (sur la dentition).

La figure 2 montre l'embout de canule positionné du côté inférieur gauche de la mâchoire, mais il est entendu qu'un embout de canule équivalent peut être positionné du côté droit.

L'embout de canule 10 peut être réalisée en tout matériau suffisamment rigide et non-toxique pour les tissus mous de la bouche du patient. Des matériaux comme un métal (inox, laiton chromé) ou un matériau synthétique ou plastique (polyéthylène, polyester, polypropylène) peuvent être utilisés.

L'embout de canule 10 peut en particulier être en matière plastique. Cela permet de conférer une élasticité suffisante à l'embout de canule 10 pour que l'embout de canule 10 puisse s'adapter à la morphologie du patient. L'embout de canule 10 peut ainsi s'adapter à tous les cas anatomiques possibles. De plus, la matière plastique permet une fabrication par moulage injection des embouts de canules pour un coût de fabrication modéré. Il devient dès lors envisageable d'utiliser des embouts de canules 10 à usage unique qui soient jetables. Jeter les embouts de canules 10 après chaque usage permet d'éviter l'étape de stérilisation de l'embout de canule 10. Dans le cas d'un embout de canule 10 jetable, il est d'autant plus avantageux pour le respect de l'environnement d'utiliser des matériaux plastiques recyclables tels que le polyéthylène ou des matériaux biodégradables.

L'embout de canule 10 peut en outre comprendre un fil d'acier noyé sur toute la longueur des conduits tubulaires formant l'embout de canule. Le fil d'acier est souple ce qui permet de conférer la meilleure adéquation possible de l'embout de canule 10 à l'anatomie du patient.

La première branche 14 de l'embout de canule 10 débouche dans un élément tubulaire 22. Cet élément tubulaire 22 est destiné à s'étendre le long de la ligne mylo-hyoïdienne du patient. La ligne mylo-hyoïdienne est une ligne de réflexion muqueuse qui se situe sur la face interne de la mandibule. Située juste au-dessous des dents, la ligne mylo-hyoïdienne commence en arrière de la fossette digastrique et se prolonge le long de la mandibule jusqu'en arrière de la troisième molaire, près de l'angle de la mâchoire. Tel qu'on le constate sur la figure 2, la surface inférieure de l'élément tubulaire 22 repose sur le sillon mylo-hyoïdien du patient. La surface d'appui de l'embout de canule 10 sur le sillon mylo-hyoïdien est ainsi augmentée ce qui permet d'améliorer encore le maintien de l'embout de canule 10. La surface inférieure de l'élément tubulaire 22, c'est-à-dire la surface qui repose sur le sillon mylo- hyoïdien, présente de préférence une surface ayant été traitée afin d'éviter tout risque de blessure et d'augmenter le confort du patient.

Selon l'exemple de la figure 1, l'axe de l'élément tubulaire 22 est orthogonal à l'axe de la première branche 14 de l'embout de canule 10. Cela permet encore d'améliorer le maintien de l'embout de canule 10 dans la cavité buccale du patient. L'élément tubulaire 22 peut cependant présenter une légère inclinaison par rapport à la position perpendiculaire à la première branche 14 sans que l'on ne sorte du cadre de la présente invention.

L'élément tubulaire 22 comprend au moins une ouverture 24 d'aspiration pour aspirer les liquides d'irrigation et le flux sanguin et/ou salivaire du patient. La ou les ouvertures 24 d'aspiration sont situées en dehors de la surface inférieure de l'élément tubulaire 22, par exemple situées à une extrémité de l'élément tubulaire 22 ou sur la surface supérieure de l'élément tubulaire 22. Une telle position permet d'éviter un phénomène de succion pouvant entraîner sensation d'inconfort, douleur et/ou créer des irritations voire des traumatismes ou des lésions du plancher buccal par simple piézo-traumatisme. En outre, on évite de réduire l'effet d'aspiration en laissant l'ouverture 24 bien dégagée.

La ou les ouvertures 24 peuvent présenter un diamètre compris entre 1 mm et 3 mm. De telles valeurs constituent un bon compromis pour obtenir un embout de canule 10 qui soit suffisamment solide et une évacuation du flux salivaire et/ou sanguin efficace. Lorsque l'ouverture 24 est trop petite, l'évacuation des flux se fait de manière peu efficace; mais, si l'ouverture 24 est trop grande, la solidité et le maintien de l'embout de canule 10 ne sont plus garantis.

Dans le cas de la figure 1, l'embout de canule 10 présente deux ouvertures 24 aux deux extrémités de l'élément tubulaire 22. Les ouvertures 24 ont un diamètre de 1,5 mm. L'avantage d'une telle configuration est que l'aspiration peut se faire dans deux sens opposés ce qui augmente l'efficacité de l'évacuation des flux dans la cavité buccale.

L'élément tubulaire 22 peut aussi comprendre une pluralité d'ouvertures 24 agencées par exemple en quinconce sur la surface supérieure de l'élément tubulaire 22 pour augmenter l'efficacité de l'évacuation des flux. Par exemple, des ouvertures 24 dont le diamètre est de 1 mm peuvent être disposés en quinconce tous les 5 mm. Une telle valeur constitue également un bon compromis entre la solidité de l'embout de canule 10 et l'efficacité d'évacuation du flux.

Dans l'exemple de la figure 1, la seconde branche 16 de l'embout de canule 10 se termine par un coude 26. La présence du coude 26 permet de faciliter le raccordement des moyens d'aspiration, dans le cas représenté un tuyau 20 d'aspiration à l'embout de canule 10. La forme du coude 26 et notamment le diamètre du cylindre débouchant est donc choisie en fonction du diamètre du tuyau 20 d'aspiration avec lequel l'embout de canule 10 est reliée.

L'axe du coude 26 peut s'étendre selon une direction sensiblement parallèle à celle de l'axe de l'élément tubulaire 22 de la première branche. Le tuyau 20 d'aspiration relié au coude 26 peut alors cheminer parallèlement au vestibule jusqu'à la commissure labiale et s'extérioriser de la cavité buccale. Une telle configuration est donc plus ergonomique. De plus, l'appui de l'embout de canule 10 est encore amélioré.

Le tuyau 20 peut alors descendre vers la face latérale du cou du patient jusqu'à la région sous-mandibulaire. Le tuyau 20 peut alors être raccordé à une source d'aspiration qui permet d'aspirer les flux via la ou les ouvertures 24 de l'embout de canule 10.

Les modes de réalisation décrits ci-dessus et les figures doivent être considérés comme ayant été présentés à titre illustratif et non restrictif, et l'invention n'est pas censée être limitée aux détails fournis ici mais peut être modifiée en restant dans le cadre de la portée des revendications annexées. En particulier, les branches peuvent être de longueurs égales ou de longueurs inégales.

## Revendications

1. Un embout de canule (10) d'évacuation de flux salivaire et/ou sanguin formé de trois conduits tubulaires (14, 12, 16) reliés entre eux, ces conduits consistant en :
- une première branche tubulaire creuse (14),
- une deuxième branche tubulaire creuse (16), et
- une partie tubulaire (12) arquée creuse reliant la première et la seconde branches,
ledit embout de canule étant **caractérisé en ce que** :
- il a la forme générale d'un étrier dont une des branches est destinée à s'insérer entre les dents et la langue du patient et l'autre des branches est destinée à s'insérer entre les dents et la joue du patient, la forme arquée de la partie tubulaire creuse (12) permettant le maintien en position de l'embout de canule,
- l'extrémité libre de la première branche (14) débouche dans un élément tubulaire creux (22) dont l'axe est sensiblement perpendiculaire au plan dudit étrier ; cette extrémité libre étant destinée à reposer sur le sillon mylo-hyoïdien du patient ; l'élément tubulaire creux (22) étant destiné à s'étendre le long de la ligne mylo-hyoïdienne du patient,
- l'extrémité libre (26) de la seconde branche (16) étant destinée à être reliée à des moyens d'aspiration et se terminant par un coude (26) qui s'étend selon une direction sensiblement parallèle à celle de l'axe de l'élément tubulaire (22).

2. L'embout de canule selon la revendication 1, dans lequelle les deux branches tubulaires sont de même longueur.

3. L'embout de canule selon la revendication 1, dans lequelle les deux branches tubulaires sont de longueurs inégales.

4. L'embout de canule selon l'une quelconque des revendication 1 à 3, dans lequelle l'élément tubulaire (22) raccordé à l'extrémité de la première branche (14) présente au moins une ouverture (24)

5. L'embout de canule selon l'une quelconque des revendications 1 à 4, comportant au moins une ouverture (24) située à une extrémité de l'élément tubulaire (22).

6. L'embout de canule selon la revendication 4 ou 5, comportant au moins une ouverture (24) située sur la surface supérieure de l'élément tubulaire (22).

7. L'embout de canule selon l'une quelconque des revendications 4 à 6, comprenant une pluralité d'ouvertures (24) disposées sur la surface de l'élément tubulaire (22).

8. L'embout de canule selon l'une quelconque des revendications 4 à 7, dans lequelle ladite au moins une ouverture (24) présente un diamètre compris entre 1 mm et 3 mm.

9. L'embout de canule selon l'une quelconque des revendications 1 à 8, dans lequelle un fil d'acier est noyé sur l'ensemble de la longueur de la canule formée par les trois conduits tubulaires (14, 12, 16).

10. L'embout de canule selon l'une quelconque des revendications 1 à 9, formé d'un matériau plastique.

11. Dispositif d'évacuation de flux salivaire et/ou sanguin comprenant :
- un embout de canule (10) selon l'une quelconque des revendications 1 à 10,
- une source (28) d'aspiration,
- un tuyau d'aspiration (20) reliant la seconde branche (16) de l'embout de canule à la source (28) d'aspiration.

## Patentansprüche

1. Ein Kanülenendstück (10) zur Entnahme von Speichel und/oder Blut, bestehend aus drei miteinander verbundenen röhrenförmigen Leitungen (14, 12, 16), wobei die Leitungen aus **F**olgendem bestehen:
- einer ersten röhrenförmigen hohlen Abzweigung (14),
- einer zweiten röhrenförmigen hohlen Abzweigung (16), und
- einem gebogenen, röhrenförmigen hohlen Abschnitt (12) der die erste und die zweite Abzweigung miteinander verbindet,
dadurch gegenzeichntet dass das Kanülenendstück:
- die allgemeine Form eines Bügels aufweist, von dem ein Schenkel zur Einführung zwischen die Zähne und die Zunge des Patienten vorgesehen ist und der andere Schenkel zur Einführung, zwischen die Zähne und die Wange des Patienten vorgesehen ist, wobei die gebogene Form des röhrenförmigen hohlen Abschnitts (12) die Inpositionhaltung des Kanülenendstücks ermöglicht,
- das freie Ende der ersten Abzweigung (14) in ein röhrenförmiges hohles Element (22) mündet, dessen Achse im Wesentlichen senkrecht zur Ebene des Bügels verläuft, wobei das freie Ende dazu bestimmt ist auf der Kieferzungenbeinfurche des Patienten zu ruhen, und wobei das röhrenförmige hohle Element (22) dazu bestimmt ist sich der Kieferzungenbeinlinie des Patienten entlang zu erstrecken,
- das freie Ende (26) der zweiten Abzweigung (16) dazu bestimmt ist mit Ansaugmittel verbunden zu sein und mit einer Biegung (26) endet, die sich im Wesentlichen parallel zur Achse des röhrenförmigen Elements (22) erstreckt.

2. Das Kanülenendstück nach Anspruch 1, wobei die beiden röhrenförmigen Abzweigungen gleich lang sind.

3. Das Kanülenendstück nach Anspruch 1, wobei die beiden röhrenförmigen Abzweigungen unterschiedlich lang sind.

4. Das Kanülenendstück nach einem der Ansprüche 1 bis 3, wobei das röhrenförmige Element (22), welches mit dem Ende der ersten Abzweigung (14) verbunden ist, mindestens eine Öffnung (24) aufweist.

5. Das Kanülenendstück nach einem der Ansprüche 1 bis 4, das mindestens eine Öffnung (24) aufweist, die an einem Ende des röhrenförmigen Elements (22) angeordnet ist.

6. Das Kanülenendstück nach Anspruch 4 oder 5, das mindestens eine Öffnung (24) aufweist, die auf der oberen Oberfläche des röhrenförmigen Elements (22) angeordnet ist.

7. Das Kanülenendstück nach einem der Ansprüche 4 bis 6, das eine Vielzahl von Öffnungen (24) aufweist, die auf der Oberfläche des röhrenförmigen Elements (22) angeordnet sind.

8. Das Kanülenendstück nach einem der Ansprüche 4 bis 7, wobei die mindestens eine Öffnung (24) einen im Bereich von 1 und 3 mm liegenden Durchmesser aufweist.

9. Das Kanülenendstück nach einem der Ansprüche 1 bis 8, wobei ein Stahldraht über die gesamte Länge der, von den drei röhrenförmigen Leitungen (141, 12, 16) gebildeten Kanüle eingebettet ist.

10. Das Kanülenendstück nach einem der Ansprüche 1 bis 9, das aus Kunststoffmaterial besteht.

11. Vorrichtung zur Entnahme von Speichel und/oder Blut, umfassend.
- ein Kanülenendstück (10) nach einem der Ansprüche 1 bis 10,
- eine Saugquelle (28),
- ein Saugrohr (20) welches die zweite Abzweigung (16) des Kanülenendstücks mit der Saugquelle (28) verbindet.

## Claims

1. A cannula tip (10) for evacuating saliva and/or blood flow formed of three tubular conduits (14, 12, 16) connected to each other, these conduits consisting of:
- a first hollow tubular branch (14),
- a second hollow tubular branch (16), and
- a hollow arcuate tubular portion (12) connecting the first and the second branches,
said cannula tip being **characterized in that**:
- it has the general shape of a stirrup, one of the branches whereof is intended to be inserted between the teeth and the tongue of the patient and the other of the branches is intended to be inserted between the teeth and the cheek of the patient, the arcuate shape of the hollow tubular portion (12) allowing the holding in position of the cannula tip,
- the free end of the first branch (14) opens into a hollow tubular element (22) the axis whereof is substantially perpendicular to the plane of said stirrup; this free end being intended to rest on the mylohyoid groove of the patient; the hollow tubular element (22) being intended to extend along the mylohyoid line of the patient,
- the free end (26) of the second branch (16) being intended to be connected to suction means and terminating in a bend (26) which extends in a direction substantially parallel to that of the axis of the tubular element (22).

2. The cannula tip according to claim 1, wherein the two tubular branches have the same length.

3. The cannula tip according to claim 1, wherein the two tubular branches have unequal lengths.

4. The cannula tip according to any one of claims 1 to 3, wherein the tubular element (22) connected to the end of the first branch (14) has at least one opening (24).

5. The cannula tip according to any one of claims 1 to 4, including at least one opening (24) located at one end of the tubular element (22).

6. The cannula tip according to claim 4 or 5, including at least one opening (24) located on the upper surface of the tubular element (22).

7. The cannula tip according to any one of claims 4 to 6, comprising a plurality of openings (24) disposed on the surface of the tubular element (22).

8. The cannula tip according to any one of claims 4 to 7, wherein said at least one opening (24) has a diameter between 1 mm and 3 mm.

9. The cannula tip according to any one of claims 1 to 8, wherein a steel wire is embedded over the entire length of the cannula formed by the three tubular conduits (14, 12, 16).

10. The cannula tip according to any one of claims 1 to 9, formed from a plastic material.

11. A device for evacuating saliva and/or blood flow comprising:
- a cannula tip (10) according to any one of claims 1 to 10,
- a suction source (28),
- a suction pipe (20) connecting the second branch (16) of the cannula tip to the suction source (28).
